# EUROPEAN PATENT APPLICATION

(11) **EP 4 730 260 A1**
(43) Date of publication of application: **22.04.2026**
(21) Application number: 25197149.5
(22) Date of filing: 20.08.2025
(51) Int. Cl.: G06T 7/35, G06T 7/33, G06T 5/90, G06T 5/40

(54) **SYSTEMS AND METHODS FOR IMAGE MATCHING PROCEDURE FOR IMAGE REGISTRATION**

(30) Priority: 21.10.2024 US 202463709793 P; 11.12.2024 US 202418977099
(71) Applicant: Palantir Technologies Inc., Denver, CO 80202 (US)
(72) Inventor: VAN ANDEL, Ethan, Berkeley (US); DRISCOLL, Joseph, Jamaica Plain (US); RAMSEY, Stephen, Mountain View (US)
(74) Representative: Sayer, Robert David

(57) **Abstract**

Systems and methods for image matching are provided. An example method includes receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins.

## Description

### CROSS REFERENCE TO RELATED APPLICATIONS

This application claims priority to U.S. Provisional Application No. 63/709,793, filed October 21, 2024, incorporated by reference herein for all purposes.

### FIELD

Certain embodiments of the present disclosure relate to image matching for image registration. More particularly, some embodiments of the present disclosure relate to image matching for images collected via multiple modalities (e.g., different sensors, different environments, different times, etc.).

### BACKGROUND

Image registration is a process for aligning two or more images or datasets. In some examples, image registration involves finding a transformation that maps points in one image or dataset to corresponding points in another image or dataset. In certain examples, image registration services for images and/or videos have numerous challenges, including visual variations between images and/or videos, minimal structured content in the images and/or videos, noise, rotation changes, scale changes, and/or perspective changes between images and/or videos.

Hence, it is desirable to improve techniques for image matching.

### SUMMARY

Certain embodiments of the present disclosure relate to image registration. More particularly, some embodiments of the present disclosure relate to image registration using image matching procedure.

At least some aspects of the present disclosure are directed to a method for an image matching process, the method comprising: receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees. In some examples, the method is performed using one or more processors.

At least some aspects of the present disclosure are directed to a system for image matching. In some examples, the system includes: one or more processors; and at least one memory storing instructions that, when executed by the one or more processors, cause the system to perform a set of operations, the set of operations comprising: receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees.

At least some aspects of the present disclosure are directed to a non-transitory computer-readable medium including instructions for image matching stored thereon, when executed by one or more processors, causing the one or more processors to perform a set of operations comprising: receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1A and FIG. 1B is a simplified diagram showing a method for image matching according to certain embodiments of the present disclosure.
FIG. 2 is an illustrative diagram for an image matching environment, according to certain embodiments of the present application.
FIG. 3 shows an example of an incoming image and a reference view.
FIG. 4 is a simplified diagram showing a computing system for implementing a system for image matching in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods for image registration cannot handle image registrations using dissimilar images. In some examples, the conventional system cannot register a color image taken by a drone with a satellite image as the reference image. For example, the conventional system cannot match an airborne image (e.g. an image from a camera disposed on an aircraft) against relevant satellite imagery in order to accurately understand the position of the airborne image and/or capturing platform. In certain examples, the conventional system cannot register images from different sources (e.g., an electro-optical (EO) sensor, an infrared sensor, etc.).

Various embodiments of the present disclosure can achieve benefits and/or improvements by a computing system, for example, using advanced image matching techniques for image registrations. In some embodiments, an image matching system, also referred to as an image registration system, uses a plurality of orientation bins to generate image transformation (e.g., geometric transform, etc.) to address rotation and/or lighting issues in image registrations. In certain embodiments, benefits include significant improvements, including, for example, performing image matching with different image modalities. In certain embodiments, other benefits include improved accuracy for image matching, for example, using orientation bins, feature points, multiple copies of the incoming image and multiple copies of a reference view generated from the reference image. In certain embodiments, systems and methods are configured to use incoming images and reference imagery to generate image matching.

According to certain embodiments, existing image-matching techniques often lack the capability to address unique characteristics owing to image dissimilarity, available priors, and/or performance requirements. In some embodiments, an image matching system (e.g., an image registration system) needs to match airborne imagery to satellite imagery where the airborne imagery may be from a different sensor mode/time of day/season/available resolution and/or where there may be significant environmental changes between when the satellite imagery was captured verse the airborne imagery. In certain examples, an airborne image refers to an image captured by an image sensor disposed on an aircraft. In some examples, a satellite image refers to an image captured by an image sensor disposed on a satellite. In some examples, an aircraft refers to an aircraft, an unmanned aircraft, an unmanned aerial vehicle (UAV), a drone, and/or the like. In some embodiments, an image can be a video frame in a video, an image in a sequence of images, image data, and/or the like. In certain embodiments, a prior refers to an existing image and/or dataset.

In some embodiments, the image matching system can access limited (e.g., moderate number of, etc.) priors on relative angles and on relative locations. In certain embodiments, the image matching system has near real-time (e.g., less than 1 second, less than 0.1 second, etc.) performance requirements. In some embodiments, the image matching system runs the image registration algorithm on a lightweight edge device (e.g., an edge device with limited computing power, an edge device with no more than 5 CPUs (computing processing unit) and/or GPUs (graphics processing unit), an edge device with no more than 10 CPUs and/or GPUs). In certain embodiments, the image matching system is intended to get an accurate and robust answer, which is more important than running at full frame rates.

According to some embodiments, the image matching system uses a feature-based method, as opposed to the area/template-based method (e.g., an AWOG (angle-weighted oriented gradient) method). In certain embodiments, an image registration system uses the image matching results for image registrations. In some embodiments, the image matching system uses one or more feature descriptors in the image matching process. In certain embodiments, a feature descriptor is a data structure (e.g., a vector) representing a part of an image that has certain characteristics. For example, a feature descriptor includes a set of numbers that describe the appearance, shape, or texture of a region (e.g., 4x4 pixels cell, 6x6 pixels cell, etc.) around a feature point, which is a point of interest in the image. In certain embodiments, a feature descriptor includes a vector including a set of numbers that describe the appearance, shape, or texture of a region (e.g., 4x4 pixels cell, 6x6 pixels cell, etc.) around a feature point.

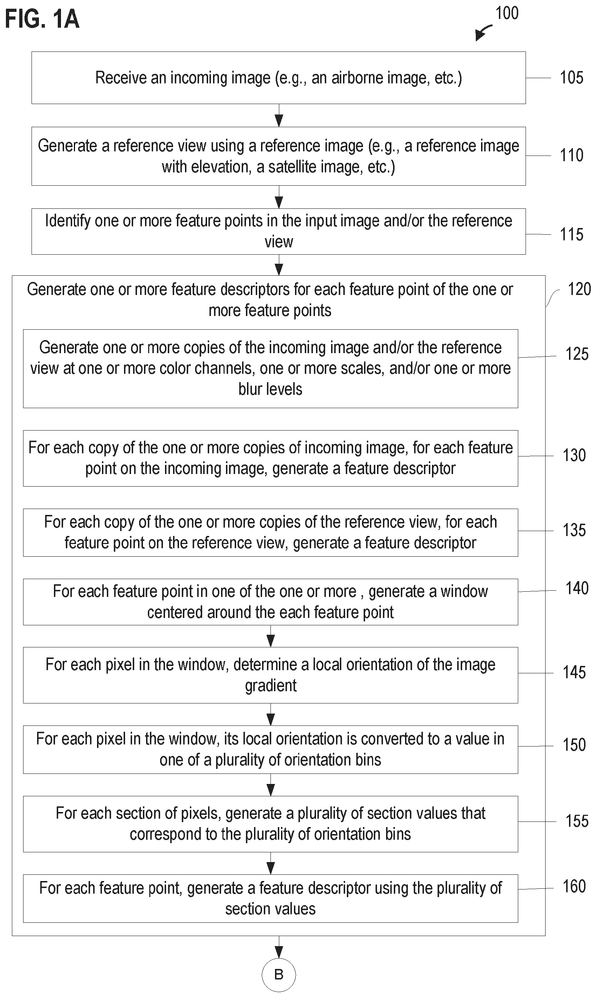

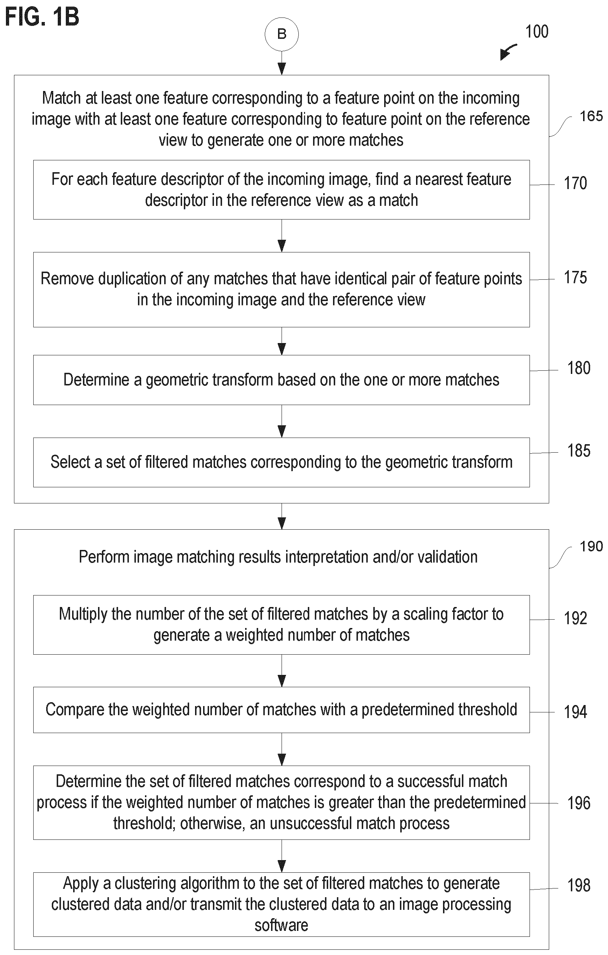

FIG. 1A and FIG. 1B is a simplified diagram showing a method 100 for image matching according to certain embodiments of the present disclosure. This diagram is merely an example. One of ordinary skill in the art would recognize many variations, alternatives, and modifications. The method 100 for image matching, also referred to as an image matching process, includes processes 105, 110, 115, 120, 125, 130, 135, 140, 145, 150, 160, 165, 170, 175, 180, 185, 190, 192, 194, 196, and 198. Although the above has been shown using a selected group of processes for the method 100 for image matching, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 600). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included on a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included on a non-transitory computer-readable medium are executed by a processor including a processor of a server computer and/or a processor of a client computer (e.g., a personal computer, and/or server rack).

According to some embodiments, at process 105, the system receives an incoming image. In certain embodiments, the incoming image is an airborne image, i.e., an image taken by an image sensor disposed on an aircraft. In some embodiments, the system accesses reference imagery including one or more reference images. In some embodiments, at process 110, the system generates a reference view using a reference image (e.g., a reference image with elevation). In certain embodiments, an image with elevation refers to image data and elevation data. In some embodiments, the image data includes image data captured via one or more image sensors on a satellite, also referred to as satellite data. In certain embodiments, the system loads image data (e.g., the satellite image) and elevation data into a three-dimension (3D) render environment. In some embodiments, the system generates the reference view based on the reference image using one or more priors associated with the incoming image. In certain embodiments, the system predicts information (e.g., location information, movement information, image sensor parameters (e.g., angle, zoom, etc.), etc.) associated with the incoming image based on one or priors (e.g., prior datasets, prior images, etc.). For example, the system predicts the incoming image location based on the one or more priors.

In certain embodiments, the incoming image is of a first imaging modality and the reference image is of a second imaging modality. In some embodiments, an image includes a still image, a video, a sequence of images, and/or the like. In some embodiments, an imaging modality refers to one or more imaging parameters associated with the imaging process. In certain embodiments, the one or more imaging parameters include an imaging sensor parameter (e.g., zoom, angle, etc.), an imaging sensor type (e.g., EO, Infrared, etc.), an imaging time, a lighting environment (e.g., during the day, at night, etc.), and/or the like. For example, the incoming image is captured by an image sensor on an aircraft, which is the first imaging modality. As an example, the reference image captured by an image sensor on a satellite, which is the second imaging modality. In certain embodiments, the first imaging modality is different from the second imaging modality.

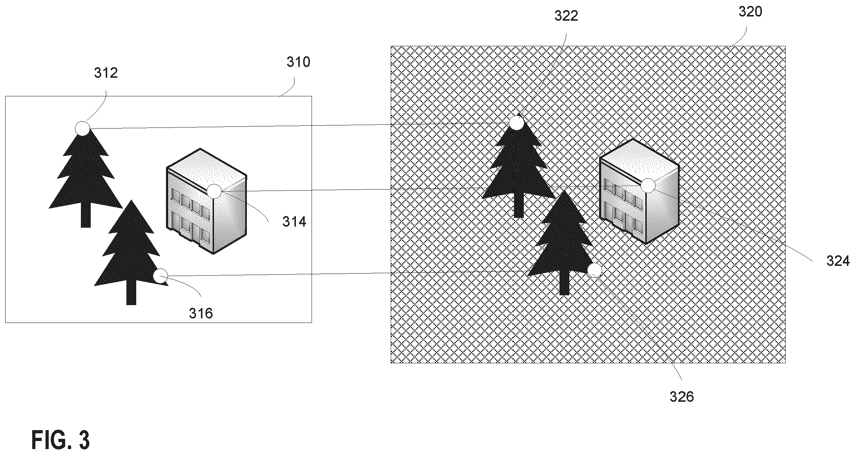

In certain embodiments, the system can use a slightly more lightweight process including a linear projection. In some examples, the linear projection includes selecting some image tiles and projecting them directly. In certain embodiments, the system generates a reference view (e.g., a slice of the reference imagery) that looks like the incoming image. In some embodiments, the reference view has the size of the incoming image. In certain embodiments, the reference view has the size of the incoming image plus some pixel buffer (e.g., 100 pixels, 128 pixels, 200 pixels, etc.) on one or more sides, and/or on each side of the incoming image, to account for misalignments (e.g., uncertainty in the correct correspondence). FIG. 3 shows an example of an incoming image and a reference view. FIG. 3 is merely an example. One of ordinary skill in the art would recognize many variations, alternatives, and modifications. In this example, the reference view 320 has a different modality from the incoming image 310. Additionally or alternatively, for example, the reference view 320 is larger than the incoming image 310 to provide the pixel buffer.

According to certain embodiments, at process 115, the system identifies one or more feature points in the incoming image and/or the reference view. In some embodiments, the system identifies the one or more feature points using a feature detector. In certain embodiments, the system identifies one or more first feature points in the incoming image and one or more second feature points in the reference view. In some embodiments, the feature detector can include an Eigen corner detector, a Harris corner detector, an ORB (Oriented FAST (features from accelerated segment test)and Rotated BRIEF (binary robust independent elementary features)) detector, and/or the like. In certain embodiments, the system uses a non-maximal local suppression and/or similar methods, for example, as a post-processing step, to ensure an even distribution of feature points across images. In some embodiments, the non-maximal local suppression is a computer vision method that selects a single entity (e.g., a feature point, a bounding box, etc.) out of overlapping or proximate entities. In certain embodiments, the non-maximal local suppression chooses the best features one after another while making sure that no features that are chosen are too close to each other. In some embodiments, the system makes sure no two features are too close, for example, within a predetermined distance (e.g., within 10-pixel points, etc.). In certain embodiments, the predetermined distance is a configurable parameter. In some embodiments, the one or more feature points include a plurality of feature points.

According to some embodiments, at process 120, the system generates one or more feature descriptors for each feature point of the one or more feature points. In some embodiments, process 120 includes multiple steps, such as one or more pre-processing steps and/or one or more feature-descriptor-generating steps. In certain embodiments, the system performs one or more pre-processing steps, such as normalization, adjusting brightness, and/or the like. For example, the use of one or more normalization methods, such as, for example, contrast limited adaptive histogram equalization, can improve matching results. As an example, the system adjusts the brightness and contrast of the incoming image and the reference view so that they are broadly similar. In certain embodiments, at process 125, the system generates one or more copies of the incoming image in one or more color channels, one or more scales (e.g., corresponding to resolutions), and/or one or more blur levels. In some embodiments, the system generates one or more copies of the reference view in one or more color channels, one or more scales, and one or more blur levels. In certain embodiments, a color channel includes a color space, a color channel (e.g., A channel of LAB space), brightness, contrast, and/or the like. For example, for the incoming image, the total number of copies of the incoming image = the number of the one or more color channels × the number of the one or more scale levels × the number of the one or more blur levels. As an example, for the reference view, the total number of copies of the reference view = the number of the one or more color channels × the number of the one or more scale levels × the number of the one or more blur levels.

In some examples, the system can convert the incoming image and the reference view to a same color space. In certain examples, the system converts a three-channel color image into a single-channel light-dark image. In some examples, the system uses the A channel of the LAB color space that approximately corresponds to how green that section of the image is. In some examples, the system can detect recognizable features using the A channel better than the light dark channel. In some embodiments, the system does image matching on the single-channel (e.g., color-intensity space, how light/dark the image is). In certain embodiments, for example, in vegetation-dominant environments, the system does image matching on the "A" channel of the LAB color space.

In some embodiments, the system performs image matching across multiple color channels by adding each copy to the feature pool in the same way as the multi-scale matching (each corresponding to a resolution). In certain embodiments, to better represent features (e.g., salient features) of different sizes, the system can process the incoming image and/or the reference view at multiple scales (e.g., corresponding to resolutions), for example, by downsampling the incoming image and the reference view one or more times by a set ratio (e.g., 1.5x, 2x, etc.), such that the system creates multiple copies of the incoming image and the reference view, with corresponding feature points, for matching.

In certain embodiments, the system can iteratively apply a blurring algorithm (e.g., a Gaussian blur) to the incoming image and/or the reference view, and adding that copy of the image to the set. Using the blurring algorithm, in some examples, features of differing levels of detail can be captured, and matches can be obtained even if there is a difference in resolution and/or focus between the incoming image (e.g., airborne image) and the reference view (e.g., the satellite image).

According to some embodiments, at process 130, for each copy of the one or more copies of the incoming image corresponding to an image parameter including a color channel parameter, a scale level parameter (e.g., a resolution), a blur level parameter, and/or the like, for each feature point on the copy of the incoming image, the system generates a feature descriptor. In certain embodiments, at process 135, for each copy of the one or more copies of the reference view (e.g., across scales, blur levels, color channels, etc.), corresponding to an image parameter including a color channel parameter, a scale level parameter (e.g., a resolution), a blur level parameter, and/or the like, for each feature point on the copy of the reference view, the system generates a feature descriptor. In some embodiments, for a feature point on the incoming image, the number of one or more feature descriptors is equal to the number of copies of the incoming image. In certain embodiments, for a feature point on the reference view, the number of one or more feature descriptors is equal to the number of copies of the reference view.

In some embodiments, the system generates a respective feature descriptor using one or more orientation bins for an image gradient of a feature point. In some embodiments, an image gradient measures the change (e.g., derivative, slope, etc.) in intensity or color of the feature point in the original image. In certain embodiments, the system generates a respective feature descriptor using a plurality of orientation bins (e.g., 6 bins, 12 bins, etc.) for image gradients. In some embodiments, the system generates a respective feature descriptor by mapping the orientation from 0-360 degree to 0-180 degree (e.g., for a first angle greater than 180, map to a second angle of the first angle minus 180, 190° is mapped to 10°), then using the plurality of orientation bins for image gradients. In some embodiments, this captures the key insight that for the matching problems patterns of dark and light may be reversed between the satellite and airborne images, which is different from existing approaches. This approach, in certain embodiments, can address differences in lighting environments between the incoming image and the reference view.

According to certain embodiments, for each copy of the one or more copies of the incoming image and/or for each copy of the one or more copies of the reference view, for each feature point in the copy, the system uses processes 140-160 to generate a feature descriptor. In some embodiments, at process 140, for each feature point, the system generates a window (e.g., 24 pixels by 24 pixels, 48 pixels by 48 pixels, etc.) centered around each feature point. In certain embodiments, at process 145, for each pixel in the window, the system determines a local orientation of the image gradient. In some examples, for a pixel in the window, its local orientation is determined by computing the x derivative and the y derivative of the corresponding copy of the image (e.g., the incoming image, the reference view), and then by computing the tangent of the x, y derivatives. In certain examples, the local orientation is represented by an angle from 0° to 360°.

According to some embodiments, at process 150, for each pixel in the window, the system converts its local orientation (e.g., its angle) to a value (e.g., the magnitude/steepness of the image gradient) in one bin of a plurality of orientation bins. In certain embodiments, the plurality of orientation bins cover from 0° (inclusive) to (exclusive) 180°, and if the local orientation (e.g., its angle) is equal to or exceeds 180°, the local orientation (e.g., its angle) is converted to a value (e.g., the magnitude/steepness of the image gradient) into one bin that covers an angle that is equal to the local orientation (e.g., its angle) minus 180°.

In some embodiments, each pixel in the window corresponds to a plurality of values that correspond to the plurality orientation bins respectively. In certain examples, a pixel corresponds to a local orientation with a proportional bleed into the closest neighboring bin. For example, a pixel with an angle of 35° can have a large portion in the 30-60 degree bin and a small portion in the 0-30 degree bin.

According to certain embodiments, at process 155, for each section of pixels, the system generates a plurality of section values that correspond to the plurality orientation bins respectively, where each section includes multiple pixels (e.g., 4 pixels by 4 pixels). In some examples, a section is N pixels by N pixels, where N is an integer. In some embodiments, each section value for a corresponding orientation bin is equal to the sum of values for all pixels in the corresponding orientation bin. For example, for the orientation bin 30-60 degree, the section value is a sum of values of all pixels (e.g., 16 pixels) for the orientation bin 30-60 degrees.

According to some embodiments, at process 160, for each feature point, the system generates a feature descriptor (e.g., a descriptor vector) using the plurality of section values that correspond to the plurality of orientation bins for all pixel sections in the window (e.g., 24 pixels by 24 pixels) that is centered around the feature point, where each section of pixels has a plurality of section values that correspond to the plurality orientation bins respectively. For example, for a window has 24 pixels by 24 pixels, and each section has 4 pixels by 4 pixels, the window has 6 sections by 6 sections. As an example, each section has 6 section values corresponding to 6 orientation bins. For example, the feature descriptor (e.g., a descriptor vector) is a one-dimensional vector that has 216 entries, wherein 216 = 36 sections × 6 section-values per section.

According to certain embodiments, at process 165 illustrated in FIG. 1B, the system matches at least one feature corresponding to a feature point on the incoming image (e.g., among the detected one or more prominent features on the incoming image) with at least one feature corresponding to a feature point on the reference view (e.g., among the detected one or more prominent features on the reference view) to generate one or more matches. In some embodiments, the system generates a plurality of matches. In some examples, the system performs the feature matching by finding a feature descriptor (e.g., a descriptor vector) for the incoming image and a feature descriptor (e.g., a descriptor vector) for the reference view that have the shortest distance, where the feature descriptor for the incoming image represents one feature on the incoming image, and the feature descriptor for the reference view represents one feature on the reference view.

According to some embodiments, the process 165 includes processes 170-185. In certain embodiments, at process 170, for each feature descriptor in the incoming image, the system finds a nearest feature descriptor (e.g., descriptor vector) in the reference view to generate a set of detected matches, which can be referred to as vector space matching. In some embodiments, for each feature descriptor for each copy of the one or more copies of the incoming image, the system finds a nearest feature descriptor in one copy of the one or more copies of the reference view. In certain embodiments, existing image matching algorithms (e.g., SIFT (scale-invariant feature transform) algorithms) usually perform match quality filter, where a match is included if the best match for a feature is, for example, at least 20% better than the second best match. In certain embodiments, the system does not perform match quality filter.

In some embodiments, at process 175, the system removes duplication of any matches that have identical pairs of feature points in the incoming image and the reference view. For example, each feature point in the incoming image and/or the reference view is represented by a plurality of feature descriptors (e.g., multiple descriptor vectors) corresponding to a plurality of copies of the corresponding image, a feature point in the incoming image and a feature point in the reference view may correspond to multiple matches between multiple feature descriptors. For example, the system identifies a first match, where a first feature point represented by a first feature descriptor in a first blur level of the incoming image may match with a second feature point represented by a second feature descriptor at a second blur level of the reference view for a shortest vector distance. As an example, the system identifies a second match, where the first feature point represented by a third feature descriptor at a third blur level of the incoming image may match with the second feature point represented by a fourth feature descriptor at a fourth blur level of the reference view for a shortest vector distance. In this example, the system removes the first match or the second match.

According to some embodiments, each feature corresponding to a feature point in the incoming image may match with multiple features in the reference view. Because of the image dissimilarity challenge, in certain embodiments, the large majority (e.g., 80%, 90%, etc.) of these matches will be incorrect, which is a much higher proportion than standard image matching techniques are designed to handle. In certain embodiments, the system uses RANSAC (random sampling and consensus) to find the largest number of matches that correspond to a given geometric transform of the images. However, in some embodiments, traditional RANSAC typically fails due to the number of incorrect matches, particularly since there may often be degenerate geometric transforms that have higher match numbers. In certain embodiments, the system first controls the parameters of the potential geometric transforms to correspond to the priors about the correct incoming image (e.g., an airborne image) location. Since the chosen reference view (e.g., a satellite image) is already rendered based on those priors, in some embodiments, at process 180, the system selects a geometric transform that is close to pure translations (e.g., no more than 10% rotation and scale change). In certain embodiments, the system performs pre-filtering on candidates of potential geometric transforms to keep only geometric transforms that are close to pure translations (e.g. no more than 10% rotation and scale change). In certain embodiments, the system selects a geometric transform (e.g., close to pure translation) that corresponds to the largest number of matches. In certain embodiments, this allows the system to exclude degenerate solutions.

In some embodiments, RANSACs may grow nonlinearly with the proportion of invalid matches, the system may further limit the search space by only searching candidate matches that approximately correspond to a rough geometric transform. Depending on the strength (e.g., confidence) of priors, in certain embodiments, the system may do multiple such searches for different potential translational offsets. In some embodiments, this limitation of the search space significantly cuts down on the number of incorrect matches and/or decreases runtime (e.g., to a more tractable level).

According to certain embodiments, at process 185, the system selects a set of filtered matches corresponding to the geometric transform, where the process is referred to as a geometric filter. In some embodiments, if multiple scales are used, the matching is performed at each scale level, then the successful matches from each scale level are combined and a final uniqueness and geometric filter is applied to determine the overall best match. FIG. 3 is an illustrative example of image matching of an incoming image 310 and a reference view 320. FIG. 3 is merely an example. One of ordinary skill in the art would recognize many variations, alternatives, and modifications. In this example, a feature point 312, associated with a feature (e.g., a tree) in the incoming image 310 is matched with a feature point 322 in the reference view 320. As an example, a feature point 314, associated with a feature (e.g., a building) in the incoming image 310 is matched with a feature point 324 in the reference view 320. As an example, a feature point 316, associated with a feature (e.g., a tree) in the incoming image 310 is matched with a feature point 326 in the reference view 320.

Referring back to FIG. 1B, according to some embodiments, at process 190, the system performs image matching results interpretation and/or validation. In certain embodiments, the image matching results include the set of filtered matches and/or the geometric transform. In some embodiments, the set of filtered matches include a first set of feature points in the incoming image matched with a second set of feature points in the reference view. In certain embodiments, the geometric transform can be applied to a first copy of the incoming image with a first set of parameters and a second copy of the reference view with a second set of parameters. In some embodiments, the geometric transform is determined based on the set of filtered matches. In certain embodiments, the first set of parameters and the second set of parameters are of same parameter types. In some embodiments, the first set of parameters and the second set of parameters can be of different parameter types. In certain embodiments, the process 190 includes processes 192-198.

In some embodiments, incorrect image matching results are possible. According to certain embodiments, at process 192, the system multiplies the number of the set of filtered matches by a scaling factor to generate a weighted number of matches. In some embodiments, the scaling factor decreases with the increasing number of detected features associated with the set of filtered matches on the incoming image. In certain examples, a first scaling factor is assigned to a first incoming image having a first number of detected features and a second scaling factor is assigned to a second incoming image having a second number of detected features. In some examples, the first number of detected features is smaller than the second number of detected features, and the first scaling factor is greater than the second scaling factor. In certain examples, a first scaling factor is assigned to a first incoming image corresponding to a first reference view having a first number of features and a second scaling factor is assigned to a second incoming image corresponding to a second reference view having a second number of features. In some examples, the first number of features is smaller than the second number of features, and the first scaling factor is greater than the second scaling factor.

According to some embodiments, at process 194, the system compares the weighted number of matches with a predetermined threshold. In certain embodiments, the system evaluates whether the weighted number of matches is greater than the predetermined threshold. In some embodiments, at process 196, the system determines that the set of filtered matches corresponds to a successful image matching process if the weighted number of matches is greater than the predetermined threshold; otherwise, the set of filtered matches corresponds to an unsuccessful image matching process. For example, if matching a feature-rich image with a first number of detected matches (e.g., 200 (two hundred) detected matches) and/or a first number of features (e.g., 200 features) in the corresponding reference view, but the system only finds a first number of filtered matches (e.g., 30 filtered matches), the first weighted number of matches (e.g., 30 * 1/200) is lower than the predetermined threshold (e.g., 0.5, 0.6, etc.) and the set of filtered matches corresponds to an unsuccessful image match process. As an example, if matching an image (e.g., a blurry image) with a second number of detected matches (e.g., 50 detected matches) and/or a second number of features (e.g., 50 features) in the corresponding reference view, but the system finds a second number of filtered matches (e.g., 30 filtered matches), the second weighted number of matches (e.g., 30 * 1/50) is greater than the predetermined number and the image matching process is successful.

In some embodiments, the image matching results are often used to correct some overall position system, such as a Kalman filter. In certain embodiments, interpreting matches can be computationally intensive. In some embodiments, simply passing the geometric transform may remove valuable information about the basis of the match (e.g., the geometric transform only corresponds to the upper right corner of the incoming image). Instead, in certain embodiments, at process 198, the system applies a clustering algorithm to the set of filtered matches to generate clustered data and/or transmits the clustered data to an image processing software (e.g., an image processing software module, a system or software module for image registration, a system for visual navigation, a system for image georegistration and/or video georegistration, etc.). In some embodiments, the system performs adaptive k-means clustering on the set of filtered matches (e.g., validated matches) to reduce the number, then passes the cluster centroids to the image processing software as correspondences with weights proportional to the cluster size. For example, the system applies a clustering algorithm to generate a cluster of N (e.g., 10, etc.) filtered matches. As an example, the system generates a weight factor for a cluster corresponding to the cluster size. For example, a larger cluster has a higher weight factor than a smaller cluster.

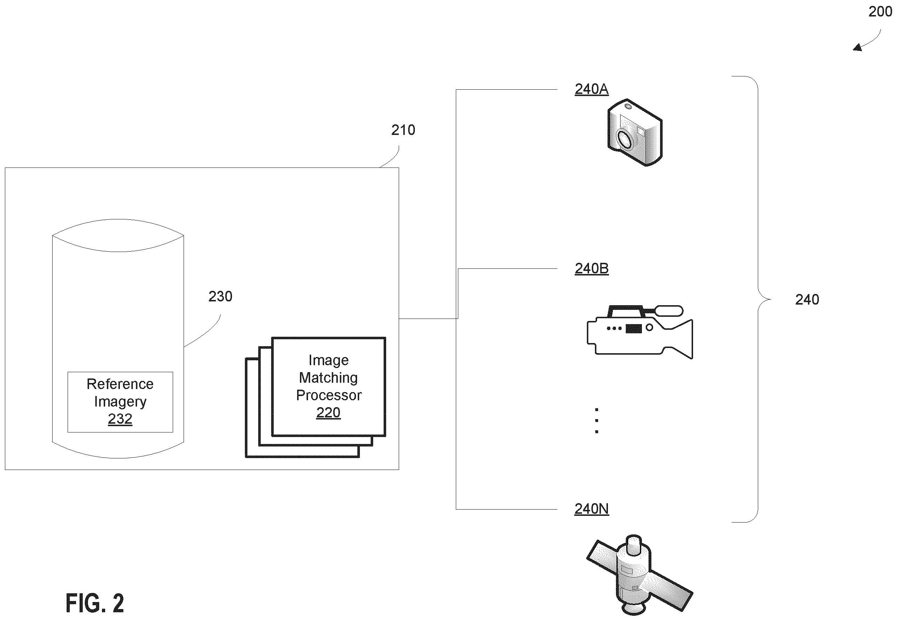

FIG. 2 is an illustrative diagram for an image matching environment 200, according to certain embodiments of the present application. FIG. 2 is merely an example. One of the ordinary skilled in the art would recognize many variations, alternatives, and modifications. For example, some of the components may be expanded, integrated, and/or combined. Other components may be inserted into those noted above. Depending upon the embodiment, the arrangement of components may be interchanged with others replaced. Further details of these components are found throughout the present disclosure.

According to certain embodiments, the image matching environment 200 includes one or more image matching systems 210 and one or more sensor systems 240 (e.g., system 240A, 240B, ... 240N, a sensor system on an aircraft, an image sensor system, etc.) for generating incoming images. In some embodiments, an aircraft may be an aircraft, an unmanned aircraft, an unmanned aerial vehicle (UAV), a drone, and/or the like. In certain embodiments, the imaging matching system 210 includes one or more image matching processors 220 and a data repository 230. In some embodiments, the data repository 230 includes reference imagery 232.

According to some embodiments, the image matching system 210 and/or the imaging matching processor 220 receives an incoming image from a sensor system 240. In certain embodiments, the incoming image is an airborne image, i.e., an image taken by an image sensor disposed on an aircraft. In some embodiments, the image matching system 210 and/or the imaging matching processor 220 accesses reference imagery 232 including one or more reference images. In some embodiments, the image matching system 210 and/or the imaging matching processor 220 generates a reference view using a reference image (e.g., a reference image with elevation). In certain embodiments, an image with elevation refers to image data and elevation data. In some embodiments, the image data includes image data captured via one or more image sensors on a satellite, also referred to as satellite data. In certain embodiments, the image matching system 210 and/or the imaging matching processor 220 loads image data (e.g., the satellite image) and elevation data into a three-dimension (3D) render environment. In some embodiments, the image matching system 210 and/or the imaging matching processor 220 generates the reference view based on the reference image using one or more priors associated with the incoming image. In certain embodiments, the image matching system 210 and/or the imaging matching processor 220 predicts information (e.g., location information, movement information, image sensor parameters (e.g., angle, zoom, etc.), etc.) associated with the incoming image based on one or priors (e.g., prior datasets, prior images, etc.). For example, the image matching system 210 and/or the imaging matching processor 220 predicts the incoming image location based on the one or more priors.

In certain embodiments, the incoming image is of a first imaging modality and the reference image is of a second imaging modality. In some embodiments, an image includes a still image, a video, a sequence of images, and/or the like. In some embodiments, an imaging modality refers to one or more imaging parameters associated with the imaging process. In certain embodiments, the one or more imaging parameters include an imaging sensor parameter (e.g., zoom, angle, etc.), an imaging sensor type (e.g., EO, Infrared, etc.), an imaging time, a lighting environment (e.g., during the day, at night, etc.), and/or the like. For example, the incoming image is captured by an image sensor on an aircraft, which is the first imaging modality. As an example, the reference image captured by an image sensor on a satellite, which is the second imaging modality. In certain embodiments, the first imaging modality is different from the second imaging modality.

In certain embodiments, the image matching system 210 and/or the imaging matching processor 220 can use a slightly more lightweight process including a linear projection. In some examples, the linear projection includes selecting some image tiles and projecting them directly. In certain embodiments, the image matching system 210 and/or the imaging matching processor 220 generates a reference view (e.g., a slice of the reference imagery) that looks like the incoming image. In some embodiments, the reference view has the size of the incoming image. In certain embodiments, the reference view has the size of the incoming image plus some pixel buffer (e.g., 100 pixels, 128 pixels, 200 pixels, etc.) on one or more sides, and/or on each side of the incoming image, to account for misalignments (e.g., uncertainty in the correct correspondence). FIG. 3 shows an example of an incoming image and a reference view. FIG. 3 is merely an example. One of ordinary skill in the art would recognize many variations, alternatives, and modifications. In this example, the reference view 320 has a different modality from the incoming image 310. Additionally or alternatively, for example, the reference view 320 is larger than the incoming image 310 to provide the pixel buffer.

According to certain embodiments, the image matching system 210 and/or the imaging matching processor 220 identifies one or more feature points in the incoming image and/or the reference view. In some embodiments, the image matching system 210 and/or the imaging matching processor 220 identifies the one or more feature points using a feature detector. In certain embodiments, the image matching system 210 and/or the imaging matching processor 220 identifies one or more first feature points in the incoming image and one or more second feature points in the reference view. In some embodiments, the feature detector can include an Eigen corner detector, a Harris corner detector, an ORB (Oriented FAST (features from accelerated segment test)and Rotated BRIEF (binary robust independent elementary features)) detector, and/or the like. In certain embodiments, the image matching system 210 and/or the imaging matching processor 220 uses a non-maximal local suppression and/or similar methods, for example, as a post-processing step, to ensure an even distribution of feature points across images. In some embodiments, the non-maximal local suppression is a computer vision method that selects a single entity (e.g., a feature point, a bounding box, etc.) out of overlapping or proximate entities. In certain embodiments, the non-maximal local suppression chooses the best features one after another while making sure that no features that are chosen are too close to each other. In some embodiments, the image matching system 210 and/or the imaging matching processor 220 makes sure no two features are too close, for example, within a predetermined distance (e.g., within 10-pixel points, etc.). In certain embodiments, the predetermined distance is a configurable parameter. In some embodiments, the one or more feature points include a plurality of feature points.

According to some embodiments, the image matching system 210 and/or the imaging matching processor 220 generates one or more feature descriptors for each feature point of the one or more feature points. In some embodiments, the process for generating feature descriptors includes multiple steps, such as one or more pre-processing steps and/or one or more feature-descriptor-generating steps. In certain embodiments, the image matching system 210 and/or the imaging matching processor 220 performs one or more pre-processing steps, such as normalization, adjusting brightness, and/or the like. For example, the use of one or more normalization methods, such as, for example, contrast limited adaptive histogram equalization, can improve matching results. As an example, the image matching system 210 and/or the imaging matching processor 220 adjusts the brightness and contrast of the incoming image and the reference view so that they are broadly similar. In certain embodiments, the image matching system 210 and/or the imaging matching processor 220 generates one or more copies of the incoming image in one or more color channels, one or more scales (e.g., corresponding to resolutions), and/or one or more blur levels. In some embodiments, the image matching system 210 and/or the imaging matching processor 220 generates one or more copies of the reference view in one or more color channels, one or more scales, and one or more blur levels. In certain embodiments, a color channel includes a color space, a color channel (e.g., A channel of LAB space), brightness, contrast, and/or the like. For example, for the incoming image, the total number of copies of the incoming image = the number of the one or more color channels × the number of the one or more scale levels × the number of the one or more blur levels. As an example, for the reference view, the total number of copies of the reference view = the number of the one or more color channels × the number of the one or more scale levels × the number of the one or more blur levels.

In some examples, the image matching system 210 and/or the imaging matching processor 220 can convert the incoming image and the reference view to a same color space. In certain examples, the image matching system 210 and/or the imaging matching processor 220 converts three-channel color image into a single-channel light-dark image. In some examples, the image matching system 210 and/or the imaging matching processor 220 uses the A channel of the LAB color space that approximately corresponds to how green that section of the images. In some examples, the image matching system 210 and/or the imaging matching processor 220 can detect recognizable features using the A channel better than the light dark channel. In some embodiments, the image matching system 210 and/or the imaging matching processor 220 does image matching on the single-channel (e.g., color-intensity space, how light/dark the image is). In certain embodiments, for example, in vegetation-dominant environments, the image matching system 210 and/or the imaging matching processor 220 does image matching on the "A" channel of the LAB color space.

In some embodiments, the image matching system 210 and/or the imaging matching processor 220 performs image matching across multiple color channels by adding each copy to the feature pool in the same way as the multi-scale matching (each corresponding to a resolution). In certain embodiments, to better represent features (e.g., salient features) of different sizes, the image matching system 210 and/or the imaging matching processor 220 can process the incoming image and/or the reference view at multiple scales (e.g., corresponding to resolutions), for example, by downsampling the incoming image and the reference view one or more times by a set ratio (e.g., 1.5x, 2x, etc.), such that the image matching system 210 and/or the imaging matching processor 220 creates multiple copies of the incoming image and the reference view, with corresponding feature points, for matching.

In certain embodiments, the image matching system 210 and/or the imaging matching processor 220 can iteratively apply a blurring algorithm (e.g., a Gaussian blur) to the incoming image and/or the reference view, and adding that copy of the image to the set. Using the blurring algorithm, in some examples, features of differing levels of detail can be captured, and matches can be obtained even if there is a difference in resolution and/or focus between the incoming image (e.g., airborne image) and the reference view (e.g., the satellite image).

According to some embodiments, for each copy of the one or more copies of the incoming image corresponding to an image parameter including a color channel parameter, a scale level parameter (e.g., a resolution), a blur level parameter, and/or the like, for each feature point on the copy of the incoming image, the image matching system 210 and/or the imaging matching processor 220 generates a feature descriptor. In certain embodiments, for each copy of the one or more copies of the reference view (e.g., across scales, blur levels, color channels, etc.), corresponding to an image parameter including a color channel parameter, a scale level parameter (e.g., a resolution), a blur level parameter, and/or the like, for each feature point on the copy of the reference view, the image matching system 210 and/or the imaging matching processor 220 generates a feature descriptor. In some embodiments, for a feature point on the incoming image, the number of one or more feature descriptors is equal to the number of copies of the incoming image. In certain embodiments, for a feature point on the reference view, the number of one or more feature descriptors is equal to the number of copies of the reference view.

In some embodiments, the image matching system 210 and/or the imaging matching processor 220 generates a respective feature descriptor using one or more orientation bins for an image gradient of a feature point. In some embodiments, an image gradient measures the change (e.g., derivative, slope, etc.) in intensity or color of the feature point in the original image. In certain embodiments, the image matching system 210 and/or the imaging matching processor 220 generates a respective feature descriptor using a plurality of orientation bins (e.g., 6 bins, 12 bins, etc.) for image gradients. In some embodiments, the image matching system 210 and/or the imaging matching processor 220 generates a respective feature descriptor by mapping the orientation from 0-360 degree to 0-180 degree (e.g., for a first angle greater than 180, map to a second angle of the first angle minus 180, 190° is mapped to 10°), then using the plurality of orientation bins for image gradients. In some embodiments, this captures the key insight that for the matching problems patterns of dark and light may be reversed between the satellite and airborne images, which is different from existing approaches. This approach, in certain embodiments, can address differences in lighting environments between the incoming image and the reference view.

According to certain embodiments, for each copy of the one or more copies of the incoming image and/or for each copy of the one or more copies of the reference view, for each feature point in the copy, the image matching system 210 and/or the imaging matching processor 220 uses multiple processes generate a feature descriptor. In some embodiments, for each feature point, the image matching system 210 and/or the imaging matching processor 220 generates a window (e.g., 24 pixels by 24 pixels, 48 pixels by 48 pixels, etc.) centered around each feature point. In certain embodiments, for each pixel in the window, the image matching system 210 and/or the imaging matching processor 220 determines a local orientation of the image gradient. In some examples, for a pixel in the window, its local orientation is determined by computing the x derivative and the y derivative of the corresponding copy of the image (e.g., the incoming image, the reference view), and then by computing the tangent of the x, y derivatives. In certain examples, the local orientation is represented by an angle from 0° to 360°.

According to some embodiments, for each pixel in the window, the image matching system 210 and/or the imaging matching processor 220 converts its local orientation (e.g., its angle) to a value (e.g., the magnitude/steepness of the image gradient) in one bin of a plurality of orientation bins. In certain embodiments, the plurality of orientation bins cover from 0° (inclusive) to (exclusive) 180°, and if the local orientation (e.g., its angle) is equal to or exceeds 180°, the local orientation (e.g., its angle) is converted to a value (e.g., the magnitude/steepness of the image gradient) into one bin that covers an angle that is equal to the local orientation (e.g., its angle) minus 180°.

In some embodiments, each pixel in the window corresponds to a plurality of values that correspond to the plurality orientation bins respectively. In certain examples, a pixel corresponds to a local orientation with a proportional bleed into the closest neighboring bin. For example, a pixel with an angle of 35° can have a large portion in the 30-60 degree bin and a small portion in the 0-30 degree bin.

According to certain embodiments, for each section of pixels, the image matching system 210 and/or the imaging matching processor 220 generates a plurality of section values that correspond to the plurality orientation bins respectively, where each section includes multiple pixels (e.g., 4 pixels by 4 pixels). In some examples, a section is N pixels by N pixels, where N is an integer. In some embodiments, each section value for a corresponding orientation bin is equal to the sum of values for all pixels in the corresponding orientation bin. For example, for the orientation bin 30-60 degree, the section value is a sum of values of all pixels (e.g., 16 pixels) for the orientation bin 30-60 degrees.

According to some embodiments, for each feature point, the image matching system 210 and/or the imaging matching processor 220 generates a feature descriptor (e.g., a descriptor vector) using the plurality of section values that correspond to the plurality of orientation bins for all pixel sections in the window (e.g., 24 pixels by 24 pixels) that is centered around the feature point, where each section of pixels has a plurality of section values that correspond to the plurality orientation bins respectively. For example, for a window has 24 pixels by 24 pixels, and each section has 4 pixels by 4 pixels, the window has 6 sections by 6 sections. As an example, each section has 6 section values corresponding to 6 orientation bins (e.g., each orientation bin covers 30 degrees, orientation bin 0° -30°, orientation bin 30°-60°, orientation bin 60° -90°, orientation bin 90° -120° orientation bin 120° -150°, orientation bin 150° -180°). For example, the feature descriptor (e.g., a descriptor vector) is a one-dimensional vector that has 216 entries, wherein 216 = 36 sections × 6 section-values per section.

According to certain embodiments, the image matching system 210 and/or the imaging matching processor 220 matches at least one feature corresponding to a feature point on the incoming image (e.g., among the detected one or more prominent features on the incoming image) with at least one feature corresponding to a feature point on the reference view (e.g., among the detected one or more prominent features on the reference view) to generate one or more matches. In some embodiments, the image matching system 210 and/or the imaging matching processor 220 generates a plurality of matches. In some examples, the image matching system 210 and/or the imaging matching processor 220 performs the feature matching by finding a feature descriptor (e.g., a descriptor vector) for the incoming image and a feature descriptor (e.g., a descriptor vector) for the reference view that have the shortest distance, where the feature descriptor for the incoming image represents one feature on the incoming image, and the feature descriptor for the reference view represents one feature on the reference view.

According to some embodiments, the process includes multiple processes. In certain embodiments, for each feature descriptor in the incoming image, the image matching system 210 and/or the imaging matching processor 220 finds a nearest feature descriptor (e.g., descriptor vector) in the reference view to generate a set of detected matches, which can be referred to as vector space matching. In some embodiments, for each feature descriptor for each copy of the one or more copies of the incoming image, the image matching system 210 and/or the imaging matching processor 220 finds a nearest feature descriptor in one copy of the one or more copies of the reference view. In certain embodiments, existing image matching algorithms (e.g., SIFT (scale-invariant feature transform) algorithms) usually perform match quality filter, where a match is included if the best match for a feature is, for example, at least 20% better than the second best match. In certain embodiments, the image matching system 210 and/or the imaging matching processor 220 does not perform match quality filter.

In some embodiments, the image matching system 210 and/or the imaging matching processor 220 removes duplication of any matches that have identical pairs of feature points in the incoming image and the reference view. For example, each feature point in the incoming image and/or the reference view is represented by a plurality of feature descriptors (e.g., multiple descriptor vectors) corresponding to a plurality of copies of the corresponding image, a feature point in the incoming image and a feature point in the reference view may correspond to multiple matches between multiple feature descriptors. For example, the image matching system 210 and/or the imaging matching processor 220 identifies a first match, where a first feature point represented by a first feature descriptor in a first blur level of the incoming image may match with a second feature point represented by a second feature descriptor at a second blur level of the reference view for a shortest vector distance. As an example, the image matching system 210 and/or the imaging matching processor 220 identifies a second match, where the first feature point represented by a third feature descriptor at a third blur level of the incoming image may match with the second feature point represented by a fourth feature descriptor at a fourth blur level of the reference view for a shortest vector distance. In this example, the image matching system 210 and/or the imaging matching processor 220 removes the first match or the second match.

According to some embodiments, each feature corresponding to a feature point in the incoming image may match with multiple features in the reference view. Because of the image dissimilarity challenge, in certain embodiments, the large majority (e.g., 80%, 90%, etc.) of these matches will be incorrect, which is a much higher proportion than standard image matching techniques are designed to handle. In certain embodiments, the image matching system 210 and/or the imaging matching processor 220 uses RANSAC (random sampling and consensus) to find the largest number of matches that correspond to a given geometric transform of the images. However, in some embodiments, traditional RANSAC typically fails due to the number of incorrect matches, particularly since there may often be degenerate geometric transforms that have higher match numbers. In certain embodiments, the image matching system 210 and/or the imaging matching processor 220 first controls the parameters of the potential geometric transforms to correspond to the priors about the correct incoming image (e.g., an airborne image) location. Since the chosen reference view (e.g., a satellite image) is already rendered based on those priors, in some embodiments, the image matching system 210 and/or the imaging matching processor 220 selects a geometric transform that is close to pure translations (e.g., no more than 10% rotation and scale change). In certain embodiments, the image matching system 210 and/or the imaging matching processor 220 perform pre-filtering on candidates of potential geometric transforms to keep only geometric transforms that are close to pure translations (e.g. no more than 10% rotation and scale change). In certain embodiments, the image matching system 210 and/or the imaging matching processor 220 selects a geometric transform (e.g., close to pure translation) that corresponds to the largest number of matches. In certain embodiments, this allows the image matching system 210 and/or the imaging matching processor 220 to exclude degenerate solutions.

In some embodiments, RANSACs may grow nonlinearly with the proportion of invalid matches, the image matching system 210 and/or the imaging matching processor 220 may further limit the search space by only searching candidate matches that approximately correspond to a rough geometric transform. Depending on the strength (e.g., confidence) of priors, in certain embodiments, the image matching system 210 and/or the imaging matching processor 220 may do multiple such searches for different potential translational offsets. In some embodiments, this limitation of the search space significantly cuts down on the number of incorrect matches and/or decreases runtime (e.g., to a more tractable level).

According to certain embodiments, the image matching system 210 and/or the imaging matching processor 220 selects a set of filtered matches corresponding to the geometric transform, where the process is referred to as a geometric filter. In some embodiments, if multiple scales are used, the matching is performed at each scale level, then the successful matches from each scale level are combined and a final uniqueness and geometric filter is applied to determine the overall best match. FIG. 3 is an illustrative example of image matching of an incoming image 310 and a reference view 320. FIG. 3 is merely an example. One of ordinary skill in the art would recognize many variations, alternatives, and modifications. In this example, a feature point 312, associated with a feature (e.g., a tree) in the incoming image 310 is matched with a feature point 322 in the reference view 320. As an example, a feature point 314, associated with a feature (e.g., a building) in the incoming image 310 is matched with a feature point 324 in the reference view 320. As an example, a feature point 316, associated with a feature (e.g., a tree) in the incoming image 310 is matched with a feature point 326 in the reference view 320.

According to some embodiments, the image matching system 210 and/or the imaging matching processor 220 performs image matching results interpretation and/or validation. In certain embodiments, the image matching results include the set of filtered matches and/or the geometric transform. In some embodiments, the set of filtered matches include a first set of feature points in the incoming image matched with a second set of feature points in the reference view. In certain embodiments, the geometric transform can be applied to a first copy of the incoming image with a first set of parameters and a second copy of the reference view with a second set of parameters. In some embodiments, the geometric transform is determined based on the set of filtered matches. In certain embodiments, the first set of parameters and the second set of parameters are of same parameter types. In some embodiments, the first set of parameters and the second set of parameters can be of different parameter types. In certain embodiments, the process for image-matching results interpretation includes multiple processes.

In some embodiments, incorrect image-matching results are possible. According to certain embodiments, the image matching system 210 and/or the imaging matching processor 220 multiplies the number of the set of filtered matches by a scaling factor to generate a weighted number of matches. In some embodiments, the scaling factor decreases with the increasing number of detected features associated with the set of filtered matches on the incoming image. In certain examples, a first scaling factor is assigned to a first incoming image having a first number of detected features and a second scaling factor is assigned to a second incoming image having a second number of detected features. In some examples, the first number of detected features is smaller than the second number of detected features, and the first scaling factor is greater than the second scaling factor. In certain examples, a first scaling factor is assigned to a first incoming image corresponding to a first reference view having a first number of features and a second scaling factor is assigned to a second incoming image corresponding to a second reference view having a second number of features. In some examples, the first number of features is smaller than the second number of features, and the first scaling factor is greater than the second scaling factor.

According to some embodiments, the image matching system 210 and/or the imaging matching processor 220 compares the weighted number of matches with a predetermined threshold. In certain embodiments, the image matching system 210 and/or the imaging matching processor 220 evaluates whether the weighted number of matches is greater than the predetermined threshold. In some embodiments, the image matching system 210 and/or the imaging matching processor 220 determines that the set of filtered matches corresponds to a successful image matching process if the weighted number of matches is greater than the predetermined threshold; otherwise, the set of filtered matches corresponds to an unsuccessful image matching process. For example, if matching a feature-rich image with a first number of detected matches (e.g., 200 (two hundred) detected matches) and/or a first number of features (e.g., 200 features) in the corresponding reference view, but the image matching system 210 and/or the imaging matching processor 220 only finds a first number of filtered matches (e.g., 30 filtered matches), the first weighted number of matches (e.g., 30 * 1/200) is lower than the predetermined threshold (e.g., 0.5, 0.6, etc.) and the set of filtered matches corresponds to an unsuccessful image match process. As an example, if matching an image (e.g., a blurry image) with a second number of detected matches (e.g., 50 detected matches) and/or a second number of features (e.g., 50 features) in the corresponding reference view, but the image matching system 210 and/or the imaging matching processor 220 finds a second number of filtered matches (e.g., 30 filtered matches), the second weighted number of matches (e.g., 30 * 1/50) is greater than the predetermined number and the image matching process is successful.

In some embodiments, the image-matching results are often used to correct some overall position system, such as a Kalman filter. In certain embodiments, interpreting matches can be computationally intensive. In some embodiments, simply passing the geometric transform may remove valuable information about the basis of the match (e.g., the geometric transform only corresponds to the upper right corner of the incoming image). Instead, in certain embodiments, the image matching system 210 and/or the imaging matching processor 220 applies a clustering algorithm to the set of filtered matches to generate clustered data and/or transmits the clustered data to an image processing software (e.g., an image processing software module, a system or software module for image registration, a system for visual navigation, a system for image georegistration and/or video georegistration, etc.). In some embodiments, the image matching system 210 and/or the imaging matching processor 220 performs adaptive k-means clustering on the set of filtered matches (e.g., validated matches) to reduce the number, then passes the cluster centroids to the image processing software as correspondences with weights proportional to the cluster size. For example, the image matching system 210 and/or the imaging matching processor 220 apply a clustering algorithm to generate a cluster of N (e.g., 10, etc.) filtered matches. As an example, the image matching system 210 and/or the imaging matching processor 220 generate a weight factor for a cluster corresponding to the cluster size. For example, a larger cluster has a higher weight factor than a smaller cluster.

**In** some embodiments, the image matching environment 200 includes a repository 230 which can include and/or store incoming images, reference images and reference views, identified features and feature points, geometric transforms, filtered matches, clustering algorithms, and/or the like. The repository 230 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

**In** some cases, various components in the image matching environment 200 can execute software or firmware stored in non-transitory computer-readable medium to implement various processing steps. Various components and processors of the image matching environment 200 can be implemented by one or more computing devices including, but not limited to, circuits, a computer, a cloud-based processing unit, a processor, a processing unit, a microprocessor, a mobile computing device, and/or a tablet computer. In some cases, various components of the image matching environment 200 (e.g., the image-matching system 210, the image-matching processor 220, the one or more sensor systems 240, etc.) can be implemented on a shared computing device. Alternatively, a component of the image matching environment 200 can be implemented on multiple computing devices. In some implementations, various modules and components of the image matching environment 200 can be implemented as software, hardware, firmware, or a combination thereof. In some cases, various components of the image matching environment 200 can be implemented in software or firmware executed by a computing device.

Various components of the image matching environment 200 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

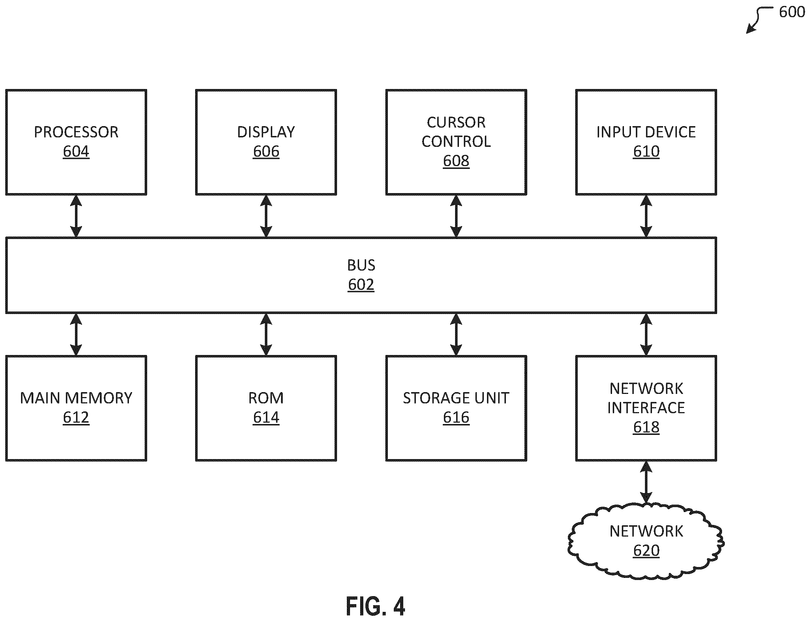

FIG. 4 is a simplified diagram showing a computing system for implementing a system 600 for image matching in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods/processes 100 are performed by the computing system 600. In some examples, the bus 602 is coupled to the processor 604, the display 606, the cursor control component 608, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for an image matching process, the method comprising: receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees; wherein at least a part of the method is implemented by one or more processors. For example, the method is implemented according to at least FIG. 1A, FIG. 1B, FIG. 2, and/or FIG. 3.

In some embodiments, the first algorithm includes a non-maximal local suppression algorithm. In certain embodiments, the plurality of feature descriptors include a plurality of first feature descriptors corresponding to a first feature in the incoming image. In some embodiments, the plurality of first feature descriptors correspond to a plurality of copies of the incoming image, wherein each copy of the plurality of copies of the incoming image corresponds to an image parameter including at least one selected from a group consisting of a color channel, a blur level, and a scale level. In certain embodiments, the plurality of first feature descriptors correspond to a plurality of copies of the reference view, wherein each copy of the plurality of copies of the reference view corresponds to an image parameter including at least one selected from a group consisting of a color channel, a blur level, and a scale level.

In some embodiments, the method further comprises: generating a window centered around one feature point of the one or more feature points, the window including a plurality of sections, each section of the plurality of sections including a plurality of pixels; and for each pixel in the window, determining a local orientation of an image gradient corresponding to the one feature point; converting the local orientation of the image gradient to one or more values corresponding to the plurality of orientation bins. In certain embodiments, the method further comprises: for each section of pixels, generating a plurality of section values that correspond to the plurality of orientation bins respectively, each section value for a corresponding orientation bin is equal to a sum of values for the plurality of pixels in the section in the corresponding orientation bin; for the one feature point, generating a feature descriptor using the plurality of section values for the plurality of sections in the window that is centered around the one feature point.

In some embodiments, the method further comprises: matching at least one feature on the incoming image with at least one feature on the reference view based on a plurality of corresponding feature descriptors to generate one or more matches. In certain embodiments, one match of the one or more matches includes a feature point in the incoming image matched to a feature point in the reference view, wherein the feature point in the reference view corresponding to a reference feature descriptor has a nearest vector distance from a feature descriptor of the feature point in the incoming image. In some embodiments, the method further comprises: removing a first match of the one or more matches that have identical pairs of feature points corresponding to a second match of the one or more matches in the incoming image and the reference view.

In some embodiments, the method further comprises: determining a geometric transform for the one or more matches; and filtering the one or more matches to generate a set of filtered matches based on the determined geometric transform. In certain embodiments, the method further comprises: multiplying the number of matches in the set of filtered matches by a scaling factor to generate a weighted number of matches; determining whether the image matching process is successful based on the weighted number of matches and a predetermined threshold. In some embodiments, the method further comprises: performing an adaptive k-means clustering on the set of filtered matches to generate clustered data; and transmitting the clustered data to an external system.

According to some embodiments, a system for image matching, the system comprising: one or more processors; and at least one memory storing instructions that, when executed by the one or more processors, cause the system to perform a set of operations, the set of operations comprising: receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees. For example, the system is implemented according to at least FIG. 1A, FIG. 1B, FIG. 2, and/or FIG. 3.

In some embodiments, the first algorithm includes a non-maximal local suppression algorithm. In certain embodiments, the plurality of feature descriptors include a plurality of first feature descriptors corresponding to a first feature in the incoming image. In some embodiments, the plurality of first feature descriptors correspond to a plurality of copies of the incoming image, wherein each copy of the plurality of copies of the incoming image corresponds to an image parameter including at least one selected from a group consisting of a color channel, a blur level, and a scale level. In certain embodiments, the plurality of first feature descriptors correspond to a plurality of copies of the reference view, wherein each copy of the plurality of copies of the reference view corresponds to an image parameter including at least one selected from a group consisting of a color channel, a blur level, and a scale level.

In some embodiments, the set of operations further comprise generating a window centered around one feature point of the one or more feature points, the window including a plurality of sections, each section of the plurality of sections including a plurality of pixels; and for each pixel in the window, determining a local orientation of an image gradient corresponding to the one feature point; converting the local orientation of the image gradient to one or more values corresponding to the plurality of orientation bins. In certain embodiments, the set of operations further comprise: for each section of pixels, generating a plurality of section values that correspond to the plurality of orientation bins respectively, each section value for a corresponding orientation bin is equal to a sum of values for the plurality of pixels in the section in the corresponding orientation bin; for the one feature point, generating a feature descriptor using the plurality of section values for the plurality of sections in the window that is centered around the one feature point.

In some embodiments, the set of operations further comprise: matching at least one feature on the incoming image with at least one feature on the reference view based on a plurality of corresponding feature descriptors to generate one or more matches. In certain embodiments, one match of the one or more matches includes a feature point in the incoming image matched to a feature point in the reference view, wherein the feature point in the reference view corresponding to a reference feature descriptor has a nearest vector distance from a feature descriptor of the feature point in the incoming image. In some embodiments, the set of operations further comprise: removing a first match of the one or more matches that have identical pairs of feature points corresponding to a second match of the one or more matches in the incoming image and the reference view.

In some embodiments, the set of operations further comprise: determining a geometric transform for the one or more matches; and filtering the one or more matches to generate a set of filtered matches based on the determined geometric transform. In certain embodiments, the set of operations further comprise: multiplying the number of matches in the set of filtered matches by a scaling factor to generate a weighted number of matches; determining whether the image matching process is successful based on the weighted number of matches and a predetermined threshold. In some embodiments, the set of operations further comprise: performing an adaptive k-means clustering on the set of filtered matches to generate clustered data; and transmitting the clustered data to an external system.

According to certain embodiments, a non-transitory computer-readable medium including instructions for image matching stored thereon, when executed by one or more processors, causing the one or more processors to perform a set of operations comprising: receiving an incoming image of a first imaging modality; receiving a reference image of a second imaging modality, the second imaging modality being different from the first imaging modality; generating a reference view of the reference image based on one or more priors associated with the incoming image; detecting a plurality of features corresponding to a plurality of feature points in the incoming image using a first algorithm that generates relatively even distribution of the plurality of feature points; generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees. For example, the non-transitory computer-readable storage medium is implemented according to at least FIG. 1A, FIG. 1B, FIG. 2, and/or FIG. 3.

In some embodiments, the first algorithm includes a non-maximal local suppression algorithm. In certain embodiments, the plurality of feature descriptors include a plurality of first feature descriptors corresponding to a first feature in the incoming image. In some embodiments, the plurality of first feature descriptors correspond to a plurality of copies of the incoming image, wherein each copy of the plurality of copies of the incoming image corresponds to an image parameter including at least one selected from a group consisting of a color channel, a blur level, and a scale level. In certain embodiments, the plurality of first feature descriptors correspond to a plurality of copies of the reference view, wherein each copy of the plurality of copies of the reference view corresponds to an image parameter including at least one selected from a group consisting of a color channel, a blur level, and a scale level.

In some embodiments, the set of operations further comprise: generating a window centered around one feature point of the one or more feature points, the window including a plurality of sections, each section of the plurality of sections including a plurality of pixels; and for each pixel in the window, determining a local orientation of an image gradient corresponding to the one feature point; converting the local orientation of the image gradient to one or more values corresponding to the plurality of orientation bins. In certain embodiments, the set of operations further comprise: for each section of pixels, generating a plurality of section values that correspond to the plurality of orientation bins respectively, each section value for a corresponding orientation bin is equal to a sum of values for the plurality of pixels in the section in the corresponding orientation bin; for the one feature point, generating a feature descriptor using the plurality of section values for the plurality of sections in the window that is centered around the one feature point.

In some embodiments, the set of operations further comprise: matching at least one feature on the incoming image with at least one feature on the reference view based on a plurality of corresponding feature descriptors to generate one or more matches. In certain embodiments, one match of the one or more matches includes a feature point in the incoming image matched to a feature point in the reference view, wherein the feature point in the reference view corresponding to a reference feature descriptor has a nearest vector distance from a feature descriptor of the feature point in the incoming image. In some embodiments, the set of operations further comprise: removing a first match of the one or more matches that have identical pairs of feature points corresponding to a second match of the one or more matches in the incoming image and the reference view.

In some embodiments, the set of operations further comprise: determining a geometric transform for the one or more matches; and filtering the one or more matches to generate a set of filtered matches based on the determined geometric transform. In certain embodiments, the set of operations further comprise: multiplying the number of matches in the set of filtered matches by a scaling factor to generate a weighted number of matches; determining whether the image matching process is successful based on the weighted number of matches and a predetermined threshold. In some embodiments, the set of operations further comprise: performing an adaptive k-means clustering on the set of filtered matches to generate clustered data; and transmitting the clustered data to an external system.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for an image matching process, the method comprising:
receiving an incoming image of a first imaging modality;
receiving a reference image of a second imaging modality, the second imaging modality being different from the first imaging modality;
generating a reference view of the reference image based on one or more priors associated with the incoming image;
detecting a plurality of features corresponding to a plurality of feature points in the incoming image using a first algorithm that generates relatively even distribution of the plurality of feature points;
generating a plurality of feature descriptors corresponding to the plurality of features, at least one of the plurality of feature descriptors being associated with at least one of a plurality of orientation bins, each orientation bin of the plurality of orientation bins covering an angle range within a range of 0 to 180 degrees;
wherein at least a part of the method is implemented by one or more processors.

2. The method of claim 1, wherein the first algorithm includes a non-maximal local suppression algorithm.

3. The method of claim 1 or claim 2, wherein the plurality of feature descriptors include a plurality of first feature descriptors corresponding to a first feature in the incoming image.

4. The method of claim 3, wherein the plurality of first feature descriptors correspond to a plurality of copies of the incoming image, wherein each copy of the plurality of copies of the incoming image corresponds to an image parameter including at least one selected from a group consisting of a color channel, a blur level, and a scale level.

5. The method of claim 3 or claim 4, wherein the plurality of first feature descriptors correspond to a plurality of copies of the reference view, wherein each copy of the plurality of copies of the reference view corresponds to an image parameter including at least one selected from a group consisting of a color channel, a blur level, and a scale level.

6. The method of any preceding claim, further comprising:
generating a window centered around one feature point of the plurality of feature points, the window including a plurality of sections, each section of the plurality of sections including a plurality of pixels; and
for each pixel in the window,
determining a local orientation of an image gradient corresponding to the one feature point;
converting the local orientation of the image gradient to one or more values corresponding to the plurality of orientation bins.

7. The method of claim 6, further comprising:
for each section of pixels, generating a plurality of section values that correspond to the plurality of orientation bins respectively, each section value for a corresponding orientation bin is equal to a sum of values for the plurality of pixels in the section in the corresponding orientation bin;
for the one feature point, generating a feature descriptor using the plurality of section values for the plurality of sections in the window that is centered around the one feature point.

8. The method of any preceding claim, further comprising:
matching at least one feature on the incoming image with at least one feature on the reference view based on a plurality of corresponding feature descriptors to generate one or more matches.

9. The method of claim 8, wherein one match of the one or more matches includes a feature point in the incoming image matched to a feature point in the reference view, wherein the feature point in the reference view corresponding to a reference feature descriptor has a nearest vector distance from a feature descriptor of the feature point in the incoming image.

10. The method of claim 8 or claim 9, further comprising:
removing a first match of the one or more matches that have identical pairs of feature points corresponding to a second match of the one or more matches in the incoming image and the reference view.

11. The method of claim 10, further comprising:
determining a geometric transform for the one or more matches; and
filtering the one or more matches to generate a set of filtered matches based on the determined geometric transform.

12. The method of claim 11, further comprising:
multiplying a number of matches in the set of filtered matches by a scaling factor to generate a weighted number of matches;
determining whether the image matching process is successful based on the weighted number of matches and a predetermined threshold.

13. The method of claim 11 or claim 12, further comprising:
performing an adaptive k-means clustering on the set of filtered matches to generate clustered data; and
transmitting the clustered data to an external system.

14. A system for image matching, the system comprising:
one or more processors; and
at least one memory storing instructions that, when executed by the one or more processors, cause the system to perform a a method in accordance with any one of the preceding claims.

15. A non-transitory computer-readable medium including instructions for image matching stored thereon, when executed by one or more processors, causing the one or more processors to perform a method in accordance with any one of claims 1 to 13.
